# FASCICULE DE BREVET EUROPEEN

(11) **EP 1 714 061 B1**
(45) Date de publication et mention de la délivrance du brevet: **15.08.2007**
(21) Numéro de dépôt: 05701453.2
(22) Date de dépôt: 06.01.2005
(51) Int. Cl.: F16K 11/12, B01D 53/04

(54) **DISTRIBUTEUR ROTATIF FONCTIONNANT EN CONTINU**
IM DAUERBETRIEB ARBEITENDER ROTATIONSVERTEILER
CONTINUOUSLY-OPERATING ROTARY DISTRIBUTOR

(30) Priorité: 08.01.2004 BE 200400008
(43) Date de publication de la demande: 25.10.2006
(73) Titulaire: Ribesse, Jacques, 1160 Bruxelles (BE)
(72) Inventeur: Ribesse, Jacques, 1160 Bruxelles (BE)
(74) Mandataire: Gevers, François
(86) Numéro de dépôt international: PCT/EP2005/050048
(87) Numéro de publication internationale: WO 2005/071297

(56) Documents cités:
- WO-A-97/32656
- WO-A-02/094417
- US-A- 4 877 429
- US-A- 5 632 804
- US-A- 5 779 771

## Description

La présente invention se rapporte à distributeur rotatif comportant un stator muni de tubulures de passage de gaz latérales vers l'extérieur et un rotor agencé pour être entraîné par un moteur, ledit distributeur comportant au moins un élément sur le rotor et un élément sur le stator, ledit élément du rotor comportant un canal central de passage de gaz le long de son axe de rotation. La présente invention se rapporte aussi à un dispositif de séparation de gaz par adsorption préférentielle comprenant ledit distributeur rotatif, un premier réacteur, un réservoir agencé pour stocker du gaz épuré, ledit dispositif est prévu pour fonctionner selon un système à 4 phases (phases 1, 2, 3, 4) de temps respectifs t1, t2, t3, et t4, comprenant l'adsorption préférentielle dans le premier réacteur des contaminants du gaz brut pendant un temps (t1 + t2) et l'évacuation simultanée du gaz épuré du premier réacteur vers ledit réservoir à gaz épuré pendant ce même temps (t1 + t2), la désorption des composants adsorbés du premier réacteur (contaminants compris dans le gaz brut) pendant un temps t3 et la repressurisation du premier réacteur pendant un temps t4 avec le gaz épuré du réservoir.

De tels dispositifs utilisés dans des procédés de séparation de gaz sont connus de l'état de la technique, ces dispositifs utilisent généralement une grande quantité de vannes à inversion permettant l'entrée et/ou la sortie des flux de gaz brut ou épuré dans les réacteurs, réservoirs et tubulures. Mais l'utilisation de ces vannes est limitée par la résistance mécanique de ces dernières, en raison du grand nombre d'opérations d'ouverture et de fermeture des vannes, bien au-delà de 500.000 par an. Ces vannes subissent des efforts considérables et doivent être équipées de moyens de contrôle de position assurant la mise à l'arrêt programmée en cas de non fonctionnement. Elles sont d'un coût élevé en équipement et en entretien et possèdent une consommation énergétique élevée pour les systèmes PSA de l'ordre de 1,2 à 1,6 KWh/m³ de gaz épuré et pour les systèmes VPSA 0,25 à 0,3 kWh/m³ de gaz épuré

Un dispositif qui permet de contourner les désavantages cités ci-dessus, par la suppression des vannes séquentielles décrites ci-dessus, suite à l'utilisation d'un dispositif mécanique centralisé original est divulgué dans le document WO 02/094417.

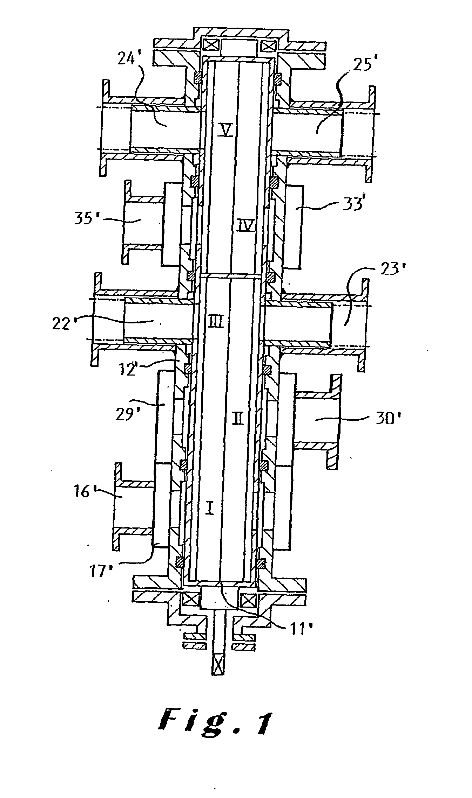

Le document WO 02/094417 divulgue un distributeur en tant qu'élément essentiel pour un procédé rentable de séparation de gaz à partir d'un gaz brut tel que de l'air par adsorption préférentielle intégré dans un dispositif comprenant deux réacteurs, un réservoir et ledit distributeur. Ce distributeur est illustré à la figure 1 et comprend un stator à 5 étages (I, II, III, IV, V) et un rotor qui effectue des mouvements rotatifs séquentiels par quart de tour, entraîné par un moteur contrôlé par un processeur.

En faisant référence à la figure 1, le distributeur des gaz et composants du gaz comporte, d'une part, un stator 12' raccordé à la source de gaz brut à épurer par un conduit 16' en communication avec une enceinte circulaire 17', aux deux réacteurs par les conduits 22', 23', 24' et 25', à la conduite 30' de décharge de composé(s) désorbé(s) en communication avec une enceinte circulaire 29', au stockage et/ou utilisation du gaz épuré et par la conduite 35' en communication avec une enceinte circulaire 33', et d'autre part, disposé dans le stator 12', un rotor 11' à fonctionnement séquentiel par quart de tour, agencé pour distribuer les gaz brut et épuré et composants désorbés vers leur destination programmée en respectant les différentes phases et sans utilisation de vannes séquentielles, le rotor et le stator comportant chacun des tubulures telles que décrites ci-dessus à mettre sélectivement en regard en fonction des phases du procédé.

Les étages 111 et V sont connectés directement aux deux réacteurs, l'étage III est en commun à une entrée de gaz brut de chacun des réacteurs, et l'étage V est en commun à une sortie de gaz épuré de chaque réacteur. L'étage I est raccordé à une arrivée de gaz brut sous pression. L'étage Il est raccordé à une sortie du gaz désorbé vers l'atmosphère ou une pompe à vide. L'étage IV est raccordé à un réservoir du gaz épuré.

Le rotor approprié est cylindrique et divisé en deux groupes, séparés de manière étanche et superposés, de chaque fois quatre compartiments égaux entre eux en volume dans chaque groupe et disposés autour d'un axe de rotation du rotor. Un premier groupe est agencé pour mettre sélectivement en communication de passage de gaz les étages I, II et III du stator. Le second groupe est agencé pour mettre sélectivement en communication de passage de gaz les étages IV et V.

Le mouvement du rotor 11' est réalisé suivant une programmation liée au type de gaz à séparer et aux caractéristiques cinétiques des adsorbants utilisés.

Ce document divulgue l'utilisation dudit dispositif comprenant au moins deux réacteurs, un réservoir, un distributeur et une pompe à vide, dans un procédé de séparation de gaz par adsorption préférentielle utilisant un cycle à quatre phases distinctes et successives dont la première phase comporte, dans un des deux réacteurs, une adsorption sous pression des composés du gaz brut dans la matière adsorbante, et une évacuation, vers une utilisation, du gaz épuré non adsorbé, et simultanément dans le second réacteur, une désorption des composés de gaz qui y sont adsorbés, par réduction de la pression évacuée vers l'atmosphère ou par une pompe à vide.

La deuxième phase comporte une poursuite de l'adsorption dans le premier réacteur, un arrêt de la désorption dans le second réacteur et une remise sous pression de celui-ci par injection rapide de gaz épuré à contre-courant.

La troisième phase comporte une alimentation en gaz brut du second réacteur sous pression avec adsorption de composants du gaz dans la masse adsorbante et une évacuation de gaz épuré et, simultanément, une désorption des composés adsorbés dans le premier réacteur, par évacuation de la pression vers l'atmosphère ou par une pompe à vide.

Enfin, la quatrième phase comporte une poursuite de l'adsorption de gaz sous pression dans le second réacteur et une évacuation du gaz épuré vers l'utilisation ainsi qu'un arrêt de la désorption dans le premier réacteur et une remise sous pression de celui-ci par injection rapide, à contre-courant, de gaz épuré, sans perte de ce gaz vers l'extérieur.

Ce document révèle en outre un mode d'écoulement des gaz dans le réacteur depuis la périphérie du réacteur vers le centre de celui-ci pendant l'adsorption sous pression, et depuis le centre du réacteur vers sa périphérie en phase de désorption.

Malheureusement, le distributeur divulgué dans le document WO 02/094417 qui présente l'avantage de ne pas comporter de vannes, impose des conditions de fabrication et de surfaçage très précises. En effet, la finition nécessaire pour ce distributeur rotatif est de l'ordre du micron. Ce distributeur est par conséquent très onéreux. De plus, étant donné la conformation du distributeur, la capacité de traitement de débit de gaz est limitée et ne concerne sûrement pas les petites unités de production étant donné le coût de réalisation qui aboutirait à un dispositif de production absolument non rentable. De plus ce type de distributeur est applicable uniquement pour des systèmes fonctionnant uniquement en mode VPSA (Vacuum Pressure Swing Adsorption). En outre, le dispositif comprenant le distributeur est un dispositif encombrant et complexe, de coût de réalisation et d'utilisation élevé. La production résultant de l'utilisation de ce distributeur étant donné que le fonctionnement est séquentiel et par quart de tour et comprend par conséquent des temps morts, n'est pas optimale. Le mode d'écoulement des gaz dans le réacteur est radial et souffre de chemin de passage préférentiels, résultant en des vitesses de passage des gaz dans les adsorbants variables au cours de leur progression. Ceci demande dès lors pour un fonctionnement adéquat une plus grande quantité d'adsorbant et augmente les coûts de production.

Un objectif selon l'invention est de palier au moins un des inconvénients de l'état de la technique en procurant un distributeur dont les conditions de fabrications sont simplifiées et qui ne nécessite pas de finitions coûteuses de l'ordre de grandeur du micron.

En effet, le distributeur rotatif selon l'invention est caractérisé en ce que ledit élément du rotor comprend au moins un canal circulaire de passage de gaz d'une largeur d'au moins environ 10 mm s'étendant sur une circonférence de 360°, ledit canal circulaire étant creusé sur sa surface externe, et substantiellement perpendiculaire à l'axe de rotation et comprend au moins une première tubulure de passage de gaz de diamètre d'au moins environ 8 mm, mettant en contact ledit canal circulaire et ledit canal central, et au moins une cavité en partie circulaire de passage de gaz de largeur d'au moins environ 30 mm creusée sur une profondeur inférieure au rayon du rotor possédant au moins une deuxième tubulure de passage de gaz de diamètre d'au moins environ 8 mm, mettant en contact ladite cavité en partie circulaire et ledit canal central, ledit élément du stator comportant au niveau du canal circulaire au moins une troisième tubulure de passage de gaz mettant en contact l'extérieur et le canal circulaire du rotor et moins une quatrième tubulure de passage de gaz mettant en contact la cavité en partie circulaire du rotor et l'extérieur.

Il ressort de ces caractéristiques qu'étant donné le fait que les cavités possèdent une largeur d'au moins environ 10 mm et que les canaux circulaires possèdent également une largeur d'au moins environ 30 mm, et du fait des 8 mm de diamètre de la tubulure s'étendant vers le canal central, la finition est nettement inférieure dans ce type de rotor et que la construction est plus aisée et que dès lors les coûts de fabrication sont moins élevés.

En outre, le dispositif de séparation de gaz est caractérisé en ce le rotor dudit distributeur est agencé pour être entraîné par un mouvement continu d'un moteur, en ce qu'un tour de rotor correspond à la séquence des quatre phases consécutives, et en ce que le distributeur comporte un premier, un deuxième et un troisième élément juxtaposés le long de l'axe de rotation, lesdits éléments étant étanches les uns par rapport aux autres et comportent chacun une première cavité en partie circulaire positionnée de manière relative les unes par rapport aux autres, le premier élément étant prévu pour la réalisation de la phase 1 et de la phase 2 en mettant en contact pendant un temps (t1 + t2) la cavité en partie circulaire du rotor avec l'entrée du premier réacteur via la tubulure du stator et le canal circulaire du rotor avec la source de gaz brut via la tubulure du stator pour l'entrée du gaz brut (adsorption pendant un temps t1 + t2), le second élément étant prévu pour mettre en communication, pour la réalisation de la phase 3, le canal circulaire du rotor avec l'atmosphère via la tubulure du stator pour le rejet des gaz adsorbés et avec le premier réacteur par au moins une cavité en partie circulaire pour la désorption des gaz impurs (décharge pendant un temps t3) via la tubulure du stator, le troisième élément étant prévu pour mettre en communication, pour la réalisation de la phase 4, de la phase 1 et de la phase 2, pendant un temps (t4 + (t1 + t2)), le canal circulaire du rotor avec le réservoir à gaz épuré via la tubulure du stator et avec le premier réacteur pour la décharge du gaz épuré dudit premier réacteur (pendant t1 + t2) et pour la repressurisation du premier réacteur (t4) par au moins une cavité en partie circulaire.

Par ces caratéristiques du dispositif, il ressort clairement que le fait que le rotor soit entraîné par un mouvement continu demande une énergie de fonctionnement du dispositif inférieure à celle d'un rotor animé d'un mouvement séquentiel par quart de tour. En effet, la majorité de l'énergie nécessaire pour animer un moteur correspond principalement à la mise en marche, dès lors, lors d'un mouvement par quart de tour, il faut mettre le rotor en mouvement quatre fois et au début de chaque cycle. Le rotor du dispositif selon l'invention étant animé d'un mouvement continu, il n'y a qu'une seule mise en marche pour un nombre donné de cycles consécutifs. De plus, un dispositif de séparation de gaz par adsorption préférentielle fonctionnant en continu évite de subir une baisse de production due au temps morts

Chaque élément susmentionné du dispositif de séparation de gaz par adsorption préférentielle selon l'invention comprend une première cavité en partie circulaire pour une alimentation et/ou une décharge du premier réacteur dont la courbure pour le premier élément s'étend sur un angle d'environ 0° à environ 180° x ((t1+t2)/(t1 + t2)), la courbure pour le deuxième élément s'étend sur un angle d'environ 180° à environ 180° + [180°x (t3/(t3+t4))], la courbure pour le troisième élément s'étend sur un angle d'environ 180° + [180° x (t3)/(t3+t4))] à environ 180° × (t1 +t2)/(t1 +t2)).

Le fait que les courbures des cavités soient calibrées en fonction de la durée des phases de fonctionnement dudit dispositif permet d'améliorer le rendement de production et dès lors de diminuer les coûts de production. En effet puisque le rotor tourne en continu, les phases constituant le cycle sont réalisées en continu, les cavités du rotor étant en contact avec les tubulures de passage de gaz extérieures du stator pendant la durée de la phase du cycle. Pour une phase donnée, lorsque la durée de la phase est dépassée, une partie pleine du rotor se trouve en face de la tubulure et bouche la tubulure du passage de gaz. Il faut dès lors comprendre que la rotation continue du rotor élimine les temps morts dans le fonctionnement dudit dispositif et que le fait qu'un tour de rotor corresponde à un cycle de quatre phases permet d'assurer une reproductibilité exemplaire des cycles et dès lors améliore le rendement de production dudit dispositif.

Par le fait que les éléments possèdent une position relative entre eux, le distributeur selon l'invention permet dès lors de réaliser par exemple la décharge en air épuré dudit premier réacteur en même temps que la phase d'adsorption dans ledit premier réacteur. Tant que la phase d'adsorption se produit, il y a adsorption des contaminants du gaz brut sur les adsorbants et du gaz épuré est produit. Si le distributeur mettait à ce moment le contenu du premier réacteur en communication avec ledit deuxième élément dudit distributeur, il y aurait une perte de production puisque ledit deuxième élément est en contact direct ou indirect avec l'atmosphère. Il est dès lors nécessaire que lors de la phase d'adsorption, ledit premier réacteur soit en communication via le troisième élément dudit distributeur avec le réservoir à gaz épuré pour qu'il puisse y évacuer le gaz épuré produit vers ledit réservoir.

Un deuxième réacteur peut être inclus dans le dispositif de séparation de gaz pour fonctionner selon ledit système à 4 phases de temps respectifs t3, t4, t1, et t2, correspondant à l'adsorption préférentielle des composants du gaz brut dans ledit deuxième réacteur pendant un temps (t3 + t4) et l'évacuation simultanée du gaz épuré dudit deuxième réacteur pendant ce même temps (t3 + t4), la désorption dudit deuxième réacteur des composants adsorbés pendant un temps t1 vers l'atmosphère et la repressurisation pendant un temps t2 dudit réacteur avec le gaz épuré du réservoir.

La présence du second réacteur, comme mentionné ci-dessus permet de réaliser une production continue par le dispositif. En effet, le premier réacteur adsorbe par exemple les gaz contaminants du gaz brut pendant que l'on désorbe les gaz contaminants du deuxième réacteur et inversement puisque le premier commence son cycle en t1 et le second en t3. En effet, pour que les deux réacteurs puissent fonctionner de manière optimale en alternance pour une production continue et pour rentabiliser au maximum la présence d'un distributeur fonctionnant en continu, il est important qu'un cycle pour le premier réacteur corresponde au niveau de la durée à un cycle pour le second réacteur. Dès lors, le distributeur est prévu pour réaliser le passage des gaz pour la première phase du premier réacteur en même temps que le passage des gaz pour la troisième phase dans le second réacteur et ainsi de suite. La durée de la troisième phase (t3) est donc égale à la durée de la première phase (t1) et la durée de la deuxième phase (t2) est donc égale à la durée de la quatrième phase (t4).

Chaque élément du dispositif de séparation de gaz par adsorption préférentielle comprend une deuxième cavité en partie circulaire pour une alimentation et une décharge d'un deuxième réacteur, caractérisé en ce que la courbure de ladite seconde cavité dudit premier élément s'étend sur un angle d'environ 180° à environ 180° + [180° x ((t3+t4)/(t3 + t4)), la courbure de ladite seconde cavité dudit deuxième élément s'étendant sur un angle d'environ 0° à environ 180° x (t1/(t1+t2)), et la courbure de ladite seconde cavité dudit troisième élément s'étendant sur un angle d'environ 180° x (t1/(t1t+t2)), à environ 180° + [180° x [(t3+t4)/(t3+t4))].

Le fait que les courbures des cavités soient calibrées en fonction de la durée des phases de fonctionnement pour le premier réacteur dudit dispositif permettait d'améliorer le rendement de production et dès lors de diminuer les coûts de production. Il est dès lors important que les courbures des deuxièmes cavités soient calibrées en fonction de la durée des phases de fonctionnement pour le second réacteur. De plus, l'agencement des cavités en partie circulaire prévoit par exemple que lorsque le premier réacteur est alimenté, la première cavité en partie circulaire du premier élément est alimentée par le biais du canal circulaire du premier élément en gaz brut, et que la tubulure de passage de gaz entre le deuxième réacteur et cette canalisation circulaire d'arrivée de gaz brut soit fermé pour que les réacteurs ne soient pas alimentés en même temps.

Le dispositif de séparation de gaz selon l'invention est en outre applicable pour des capacités de production comprises dans la plage allant d'environ 1 à environ 4000 m³/h.

La simplicité de fabrication et le coût de ce dispositif permettent de l'adapter à des petits volumes et à des grands volumes de production. Un distributeur de gaz onéreux ne peut être, d'un point de vue réaliste, intégré dans une unité de faible production sans provoquer une augmentation important du prix de production du produit fini. Selon l'invention, le distributeur étant peu coûteux, flexible et de fabrication aisée, il est envisageable de l'intégrer à des unités de faible rendement de production.

De plus, le dispositif de séparation de gaz par adsorption préférentielle est une tour compacte comprenant deux réacteurs constitués d'un seul réservoir de forme tronconique divisé en deux parties symétriques dont l'alimentation en gaz brut est réalisée de manière verticale, le réservoir, les pompes , le compresseur et le distributeur.

De cette manière, le dispositif est très compact, peu encombrant et le mode d'écoulement des gaz dans le réacteur est transversal sans souffrir de chemin préférentiel. Ce mode d'écoulement résulte en des vitesses de passage de gaz dans les adsorbants constantes au cours de leur progression.

D'autres caractéristiques, détails et avantages de l'invention ressortiront à la lecture du mémoire descriptif fait en référence aux dessins annexés donnés à titre d'exemples non limitatifs et dans lesquels:
La figure 1 est une illustration d'un distributeur de l'état de la technique,
la figure 2 est une illustration du dispositif de séparation de gaz par adsorption préférentielle selon l'invention,
la figure 3 est une illustration pour une réalisation préférentielle du stator du distributeur du dispositif de séparation de gaz par adsorption préférentielle, comprenant une vue éclatée des tubulures de passage de gaz de l'intérieur du stator vers l'extérieur.
la figure 4 est une illustration pour la même réalisation préférentielle du rotor du distributeur du dispositif de séparation de gaz par adsorption préférentielle correspondant au stator illustré à la figure 3 dans lequel il se loge.
la figure 5 est une coupe transversale selon la ligne 1-1 à la figure 4 de la première cavité en partie circulaire du premier élément du rotor du distributeur selon l'invention,
la figure 6 est une coupe transversale selon la ligne II-II à la figure 4 de la deuxième cavité en partie circulaire du premier élément du rotor du distributeur selon l'invention,
la figure 7 est une coupe transversale selon la ligne III-III à la figure 4 de la deuxième cavité en partie circulaire du deuxième élément du rotor du distributeur selon l'invention,
la figure 8 est une coupe transversale selon la ligne IV-IV à la figure 4 de la première cavité en partie circulaire du deuxième élément du rotor du distributeur selon l'invention,
la figure 9 est une coupe transversale selon la ligne V-V à la figure 4 de la première cavité en partie circulaire du troisième élément du rotor du distributeur selon l'invention,
la figure 10 est une coupe transversale selon la ligne VI-VI à la figure 4 de la deuxième cavité en partie circulaire du troisième élément du rotor du distributeur selon l'invention
La figure 11 est une coupe transversale selon la ligne VII-VII à la figure 4 du canal circulaire du rotor du distributeur selon l'invention
La figure 12 montre deux coupes transversales de la tubulure (22) illustré à titre d'exemple comprenant l'ouverture rectangulaire. La figure 12 A est une coupe transversale selon l'axe Y-Y de la tubulure 22 comme illustré à la figure 3 et la figure 12 B est une coupe transversale selon l'axe Z-Z de la tubulure 22 comme illustré à la figure 3.
La figure 13 est un graphique de la pression dans les réacteurs en fonction du temps. La pression dans A est représentée en traits continus et la pression dans B en traits interrompus.

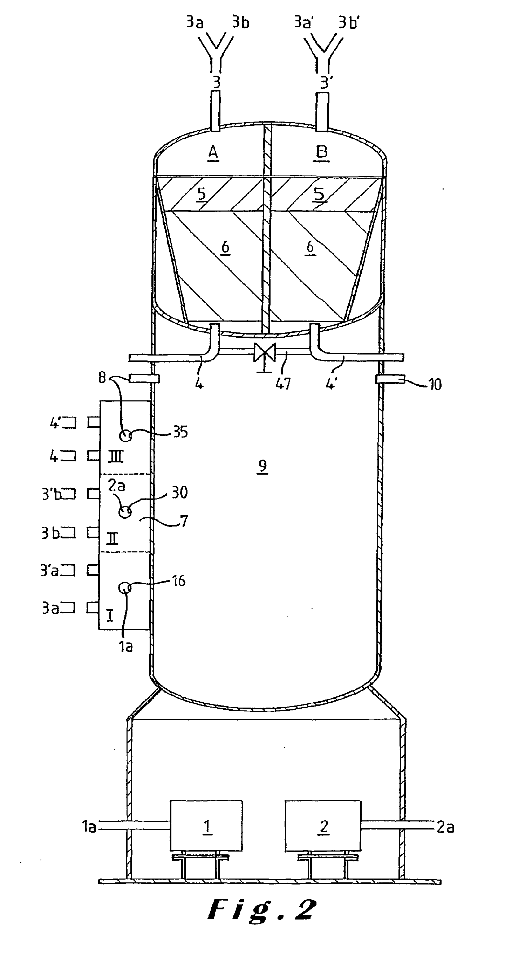

La figure 2 montre le dispositif selon l'invention fonctionnant selon le système des quatre phases et comprenant deux réacteurs A et B, un compresseur (1), un tube d'amenée du gaz brut (3a) reliant le sommet du premier réacteur A au premier élément du distributeur, un tube d'amenée du gaz brut (3'a) reliant le sommet du second réacteur B au premier élément du distributeur, un tube de désorption des composés non adsorbé (3b) reliant le sommet du premier réacteur A au second élément du distributeur, un tube de désorption des composés non adsorbé (3'b) reliant le sommet du second réacteur B au second élément du distributeur, un distributeur rotatif (7), un réservoir 9, deux canalisations (4 et 4') reliant les réacteurs A et B respectivement au troisième élément du distributeur, une canalisation (8) reliant le distributeur au niveau de sa tubulure (35) au réservoir (9), une canalisation (10) reliant le réservoir vers une utilisation, éventuellement une pompe à vide (2) pour le système VPSA (vacuum pressure swing adsorption) connectée à la tubulure (30) du second élément du distributeur. Dans le cas de l'absence d'une pompe à vide, la tubulure (30) du distributeur normalement reliée à la pompe à vide en système VPSA est simplement laissée en contact libre avec l'atmosphère (système PSA). Les deux réacteurs comportent en outre une couche de dessicant pour éliminer l'humidité (5) et un adsorbant spécifique des contaminants (6). Le distributeur comprend trois autres tubulures, la tubulure (16) connectée avec le compresseur d'air, la tubulure (30) connectée comme mentionné ci-dessus et la tubulure 35 connectée au réservoir.

Selon une réalisation préférentielle, telle que mentionnée ci-avant, le dispositif selon l'invention comprend deux réacteurs fonctionnant de manière alternée selon un système à quatre phases.

Pendant la première phase, de l'air sous pression, préséché et refroidi provenant du compresseur (1) est admis dans le distributeur au niveau de la tubulure (16) et ressort via la canalisation 3a pour alimenter le réacteur A. L'air traverse celui-ci, d'abord au travers d'une couche de dessicant (5) pour éliminer la teneur résiduelle en vapeur d'eau et traverse ensuite une couche d'adsorbant spécifique (6) des contaminants du gaz brut (dans ce cas, l'azote). Ceci se produit à une vitesse constante étant donné la forme tronconique du réacteur. Le gaz épuré issu du réacteur A (du gaz épuré qui ne s'adsorbe donc pas) parvient au distributeur par le tube (4) et ensuite, il est envoyé au réservoir à gaz épuré via le tube (8) connecté sur la tubulure (35) du distributeur. Cette opération assure une stabilité de pression au système. Le gaz épuré est alors amené vers une utilisation par la canalisation (10).

Simultanément, on procède à la désorption du réacteur B par abaissement de la pression et par rinçage. A cet effet, une faible quantité de gaz épuré, prélevé directement à la sortie du réacteur A au niveau de la canalisation 4 à l'aide de la canalisation 47 munie de sa vanne de communication est utilisée pour rincer à contre courant le réacteur B via le tube 4'. De manière alternative, on peut prévoir un trou calibré entre les deux réacteurs pour remplacer la vanne et la canalisation (47). Ce gaz épuré traverse la couche d'adsorbant (6) du réacteur B qui se décharge en gaz préalablement adsorbé par l'effet de rinçage et de l'abaissement de pression via le tube 3'b connecté au distributeur au niveau de la tubulure 30. Si la tubulure 30 est connectée à la pompe à vide (2), le gaz désorbé est évacué via la pompe à vide (VPSA). Le débit du gaz de rinçage est réglé de façon à remplir le réacteur. Si la tubulure 30 est une sortie vers l'atmosphère, le gaz désorbé et le gaz de rinçage sont évacués directement dans l'atmosphère (PSA). Cette phase 1 a une durée comprise environ entre 14 et 25 secondes suivant la cinétique d'adsorption et de désorption du tamis moléculaire.

Pendant la seconde phase, qui est de courte durée, le processus d'alimentation en air dans le réacteur A se poursuit comme pendant la phase 1 avec une production, comme pendant la première phase encore, de gaz épuré vers le réservoir (9). A ce moment, le réacteur B subit une repressurisation grâce à l'envoi de gaz épuré contenu dans le réservoir via la canalisation (4') relié à la tubulure (35) du distributeur, via la canalisation (8). La pression régnant dans le réservoir étant supérieure à celle dans le réacteur B, il suffit de mettre en communication le réacteur B et le réservoir. En effet, un gaz a toujours tendance à occuper le plus de volume possible et à se détendre. Le fait de mettre les deux compartiments en communication provoque la détente du gaz qui s'arrêtera lorsque la pression dans les deux compartiments sera la même. Cette phase 2 est de courte durée dont la valeur est comprise entre 3 et 5 secondes.

Lors de la troisième phase, de l'air sous pression, préséché et refroidi provenant du compresseur (1) est admis dans le distributeur au niveau de la tubulure (16) et ressort via la canalisation 3' pour alimenter le réacteur B. L'air traverse celui-ci, d'abord au travers d'une couche de dessicant (5) pour éliminer la teneur résiduelle en vapeur d'eau et traverse ensuite une couche d'adsorbant spécifique (6). Ceci se produit à une vitesse constante étant donné la forme tronconique du réacteur. Le gaz épuré issu du réacteur B (du gaz épuré qui ne s'adsorbe donc pas) parvient au distributeur par le tube (4') et ensuite, il est envoyé au réservoir à gaz épuré via le tube (8) connecté à la tubulure (35) du distributeur. Le gaz épuré est alors amené vers une utilisation par la canalisation (10).

Simultanément, on procède à la désorption du réacteur A par abaissement de la pression et par rinçage. A cet effet, une faible quantité de gaz épuré, prélevé directement à la sortie du réacteur B au niveau de la canalisation (4') à l'aide de la canalisation (47) munie de sa vanne de communication est utilisée pour rincer à contre courant le réacteur A via le tube (4). Ce gaz épuré traverse la couche d'adsorbant (6) du réacteur A qui se décharge en gaz préalablement adsorbé par l'effet de rinçage et de l'abaissement de pression via le tube (3b) connecté au distributeur au niveau de la tubulure (30). Cette phase 3 a une durée comprise environ entre 14 et 25 secondes suivant la même cinétique d'adsorption et de désorption du tamis moléculaire puisqu'il est le même dans le réacteur A et le réacteur B.

La quatrième phase comprend la poursuite de la troisième phase dans le réacteur B, l'adsorption continue et le production de gaz épuré aussi. Le réacteur A est quant à lui, repressurisé rapidement par prélèvement de gaz épuré contenu dans le réservoir via la canalisation (4) relié à la tubulure (35) du distributeur, via la canalisation (8). Cette phase 4 est de courte durée dont la valeur est comprise entre 3 et 5 secondes.

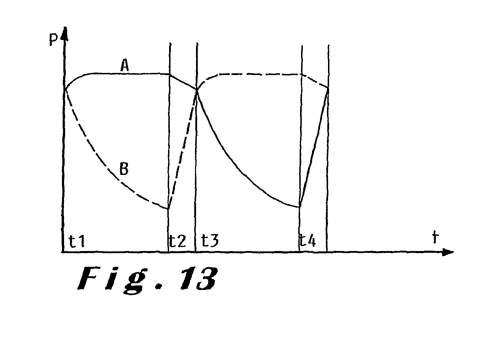

Les quatre phases sont illustrées à la figure 13 sous forme de graphique de la pression en fonction du temps (durée des phases) des deux réacteurs A et B (A est représenté en traits continus et B en pointillés).

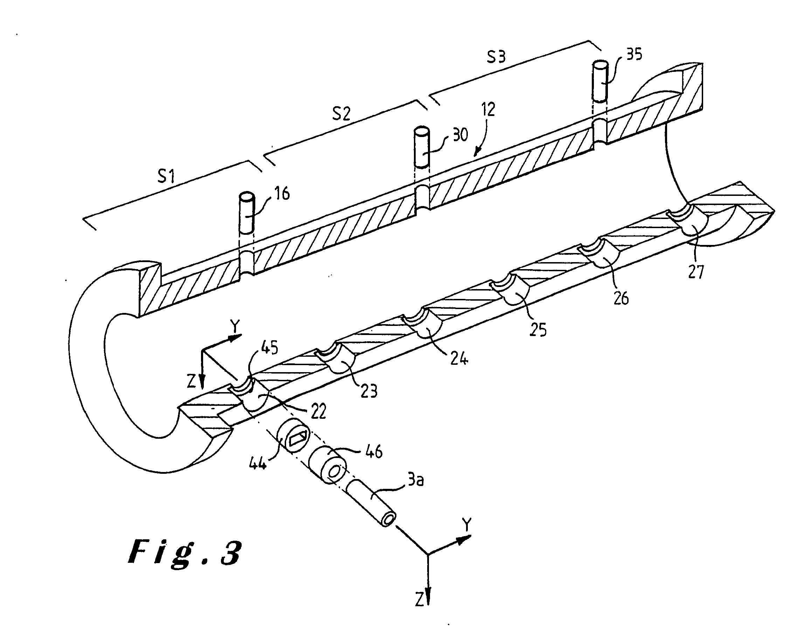

La figure 3 représente le stator (12) selon l'invention. Le stator selon l'invention comporte trois éléments juxtaposés S1, S2, S3. Le stator (12) comporte des 3 connexions vers l'extérieur (tubulure (16) avec le compresseur d'air (1) sur l'élément S1, tubulure (30) avec l'atmosphère en système PSA ou avec la pompe à vide (2) en système VPSA sur l'élément S2, tubulure (35) avec le réservoir à gaz épuré (9) sur l'élément S3 et 6 tubulures de communication vers les réacteurs). La tubulure (22) relie l'élément S1 du stator au réacteur A, la tubulure (23) relie l'élément S1 du stator au réacteur B, ces tubulures (22) et (23) étant des tubulures d'amenée de gaz brut vers les réacteurs A et B, respectivement. Le tuyau (3a) vient se connecter au niveau de la tubulure (22) et le tuyau (3'a) vient se connecter au niveau de la tubulure (23). La tubulure (25) relie l'élément S2 du stator au réacteur A, la tubulure (24) relie l'élément S2 du stator au réacteur B, ces tubulures (25) et (24) étant des tubulures de rejet de contaminants du gaz brut des réacteurs A et B, respectivement vers l'extérieur (vers l'atmosphère en système PSA ou vers la pompe à vide en système VPSA). Le tuyau (3b) vient se connecter au niveau de la tubulure (25) et le tuyau (3'b) vient se connecter au niveau de la tubulure (24). La tubulure (26) relie l'élément S3 du stator au réacteur A, la tubulure (27) relie l'élément S3 du stator au réacteur B, ces tubulures (26) et (27) étant des tubulures d'évacuation du gaz épuré vers le réservoir provenant des réacteurs A et B, respectivement. Le tuyau (4) vient se connecter au niveau de la tubulure (26) et le tuyau (4') vient se connecter au niveau de la tubulure (27).

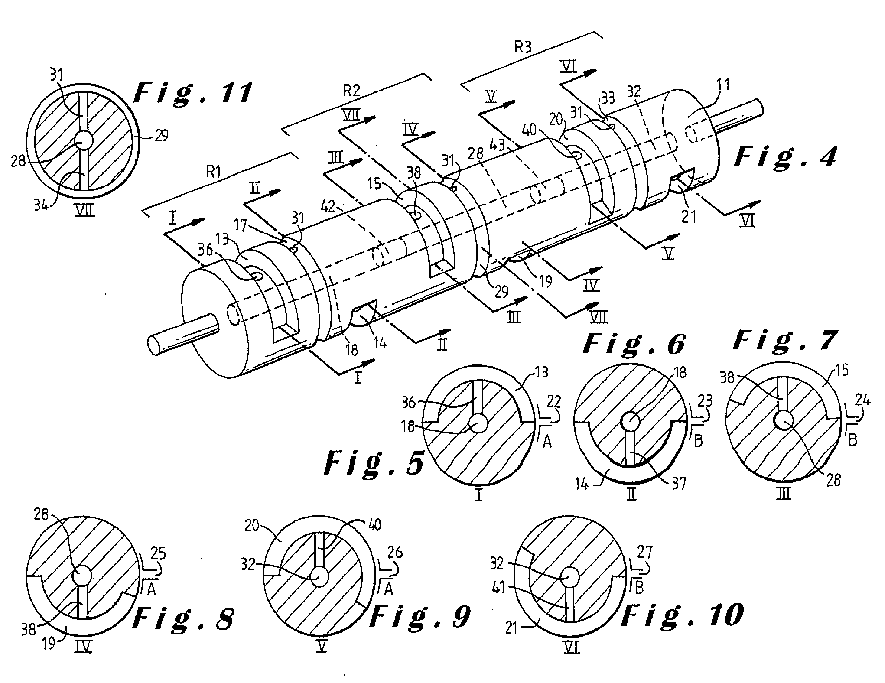

La figure 4 illustre le rotor (11), qui, logé dans le stator (12) représenté à la figure 3 constitue le distributeur (7) selon la réalisation préférentielle donnée à titre d'exemple ici. Le rotor est entraîné par un moteur (non illustré ) lui conférant un mouvement de rotation continue. Ce moteur peut être par exemple, un moteur d'entraînement relié à un réducteur de vitesse. Le rotor (11) comprend, tout comme le stator (12), les deux (11) et (12) étant concentriques, trois éléments juxtaposés R1, R2, et R3 correspondant aux éléments juxtaposés S1, S2, et S3 du stator (12). Les éléments R1, R2, et R3 étant prévus pour être concentriques à S1, S2 et S3, respectivement, et dès lors de même longueur, les diamètres extérieurs de R1, R2, et R3, étant respectivement très légèrement inférieurs aux diamètres internes de S1, S2 et S3 pour permettre à R1, R2 et R3 d'entrer respectivement en rotation dans S1, S2, et S3. De préférence, les éléments R1, R2 et R3 seront de même diamètre et S1, S2, S3 aussi (intérieur et extérieur). De manière plus préférentielle, les éléments R1, R2 et R3 seront fabriqués en une seule pièce et les éléments S1, S2 et S3 aussi. Des joints toriques (non illustrés) sont situés entre les éléments pour assurer une étanchéité de ceux-ci les uns par rapport aux autres. Les canalisations et tubulures 16, 30, et 35 et les 22, 23, 24, 25, 26, et 27 ont été représentées à 90° les unes des autres, mais ceci est une représentation pratique selon la réalisation préférentielle non limitative expliquée ici, et ces canalisations et tubulures pourrait se situer de part et d'autre ou avec n'importe que angle les séparant, de même que ni les canalisations et tubulures 16, 30 et 35 ni les canalisations et tubulures 22, 23, 24, 25, 26, et 27 ne doivent être alignés.

Le rotor comprend par élément un canal central s'étendant le long de l'axe de rotation. Lors d'une fabrication selon la réalisation préférentielle, en une seule pièce, le canal central est pourvu de bouchons (42 et 43) prévus pour assurer une étanchéité parfaite entre les 3 éléments. Chaque élément comprend au moins une cavité en partie circulaire, creusée dans l'épaisseur de la matière constituant le rotor, et dans la réalisation préférentielle donnée à titre d'exemple ici, chaque élément comprend deux cavités en partie circulaire prévues pour communiquer avec les réacteurs A et B. Une tubulure relie chaque cavité en partie circulaire au canal central. Chaque élément comprend aussi un canal circulaire comportant au moins une tubulure de communication avec le canal central, et de préférence, dans la réalisation préférentielle, chaque canal circulaire communique avec le canal central au moyen de deux tubulures.

La largeur de la cavité en partie circulaire sera d'environ au moins 30 mm pour les plus petites unités de production et la profondeur sera d'environ au moins 8 mm. Le diamètre de la tubulure reliant le canal central à ladite cavité sera d'environ 8 à 12 mm de même que le diamètre du canal central. La largeur du canal circulaire est d'environ 8 à 12 mm et sa profondeur aussi. Ces valeurs sont données à titre d'exemple pour des petites unités de production (environ 2 m³/h), il faut évidemment comprendre que ces valeurs sont adaptables en fonction du débit de gaz à traiter.

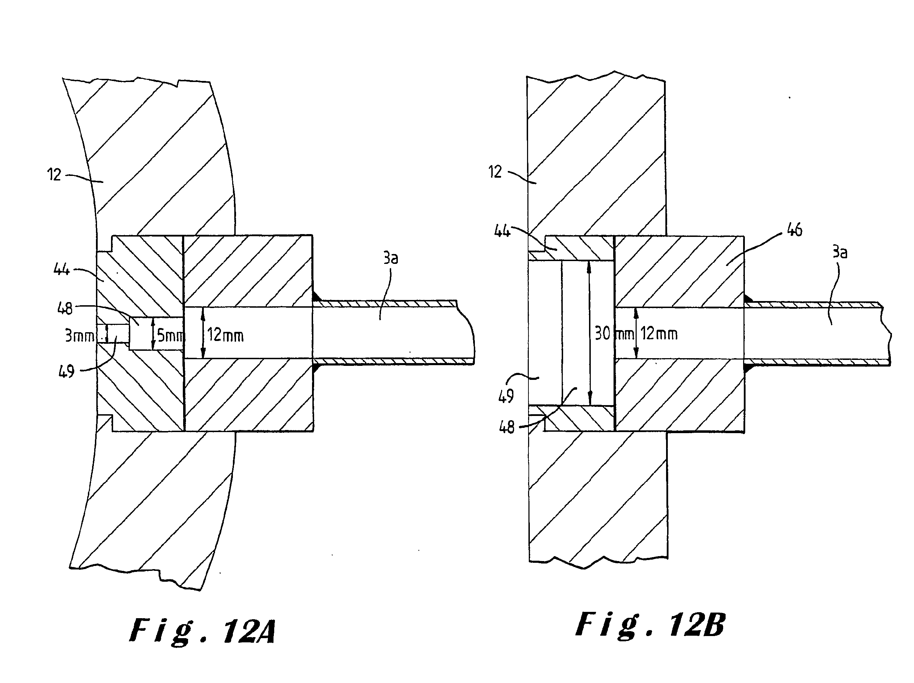

Le premier élément R1 comprend dès lors un canal circulaire (17) prévu pour recevoir en continu du gaz brut sous pression provenant du compresseur d'air. Ce canal circulaire communique en permanence, tout au long de la rotation du rotor, avec la tubulure 16 du stator et avec le canal central 18 via les deux tubulures (31) et (34) (une coupe transversale du même canal circulaire mais sur le deuxième élément est représenté à la figure 11). Le canal central (18) contient donc en permanence de l'air brut à amener vers les deux réacteurs A et B. L'élément R1 comprend aussi une cavité (13) en partie circulaire reliée par une tubulure (36) au canal central (18), cette cavité étant prévue pour amener de l'air brut sous pression au réacteur A provenant du canal central (18) lorsque la cavité (13) se trouve en face de la tubulure (22) du stator. La cavité étant solidaire du rotor, elle est en rotation continue et la durée de la communication entre la tubulure (22) du stator est proportionnelle à la courbure de la cavité (13). Le même raisonnement s'applique à la cavité (14) en partie circulaire reliée par une tubulure (37) au canal central (18), cette cavité étant prévue pour amener de l'air brut sous pression au réacteur B provenant du canal central (18) lorsque la cavité (14) se trouve en face de la tubulure (23) du stator. Comme mentionné ci-avant, la durée d'un cycle de production est égal à la somme de la durée de chacune des quatre phases, à savoir t1 + t2 + t3 + t4 et correspond à un tour complet du rotor. L'amenée de l'air brut sous pression dans le réacteur A se produit pendant les deux premières phases et donc pendant t1 + t2. L'amenée de l'air brut sous pression dans le réacteur B se produit pendant les deux dernières phases et donc pendant t3 + t4. Il est dès lors logique que la courbure de la première cavité (dont une coupe transversale est représentée à la figure 5) s'étende d'environ 0° à environ 180° x ((t1+t2)/(t1 + t2)) à l'épaisseur des tubulures et cavités près et que la courbure de la seconde cavité (dont une coupe transversale est représentée à la figure 6) s'étende d'environ 180° à environ 180° + (180° x (t3+t4)/(t3 + t4)) à l'épaisseur des tubulures et cavités près, chacune constituant dès lors environ un demi cercle situé de part et d'autre d'un plan hypothétique horizontal passant par les points 0° et 180°. Le gaz brut présent dans le canal central remplit les tubulures (36) et (37) et les cavité (13) et (14) par diffusion, mais ne peut sortir en dehors vers les réacteurs A et B (via les tuyaux 3a et 3'a) que lorsque les tubulures (22) et (23) du stator sont en face des cavités. Etant donné l'agencement des cavités, lorsque la cavité (13) est en communication avec la tubulure (22) (pendant un temps t1 + t2), la cavité (14) est fermée par la paroi du stator et lorsque la cavité (14) arrive au niveau de la tubulure (23), la cavité (13) n'est plus en communication avec la tubulure (22), mais avec la paroi du stator. En résumé lorsque A est alimenté en gaz brut pendant t1 + t2, B n'est pas alimenté en gaz brut. Lorsque B est alimenté en gaz brut pendant t3 + t4, A n'est pas alimenté en gaz brut.

Le deuxième élément R2 comprend dès lors un canal circulaire (29) prévu pour rejeter les gaz désorbés provenant des réacteurs A et B à l'atmosphère (en système PSA) ou à l'aide d'une pompe à vide (2) (système VPSA). Ce canal circulaire communique en permanence, tout au long de la rotation du rotor, avec la tubulure 30 du stator et avec le canal central 28 via les deux tubulures (31) et (34) (une coupe transversale de ce canal circulaire est représenté à la figure 11). Le canal central (28) contient donc en permanence des gaz désorbés provenant des deux réacteurs A et B à rejeter vers l'atmosphère à l'aide d'une pompe à vide (2) ou non. L'élément R2 comprend aussi une cavité (15) en partie circulaire reliée par une tubulure (38) au canal central (28), cette cavité étant prévue pour amener les gaz désorbés du réacteur B au canal central (28) et les rejeter vers l'atmosphère lorsque la cavité (15) se trouve en face de la tubulure (24) du stator. La cavité étant solidaire du rotor, elle est en rotation continue et la durée de la communication entre la tubulure (24) du stator est proportionnelle à la courbure de la cavité (15). Le même raisonnement s'applique à la cavité (19) en partie circulaire reliée par une tubulure (39) au canal central (28), cette cavité étant prévue pour amener les gaz désorbés du réacteur A au canal central (28) lorsque la cavité (19) se trouve en face de la tubulure (25) du stator. La durée de la communication entre la tubulure (24) et la cavité (15) est t1, la durée de la communication entre la tubulure (25) du stator et la cavité (19) est t3. La désorption des gaz est réalisée pendant la troisième phase, à savoir au temps t3 pour le réacteur A et au temps t1 pour le réacteur B. Il est évident que lorsque le réacteur A adsorbe les gaz brut, il faut qu'il n'y ait aucun contact avec l'atmosphère puisque la production de gaz épuré est réalisée en même temps que l'adsorption. Si c'était le cas, le gaz épuré serait perdu dans l'atmosphère. La désorption des impuretés adsorbées doit être réalisée après que l'adsorption soit terminée et quand le gaz épuré a été isolé dans un réservoir de stockage. Dès lors la désorption est réalisée au temps t3 après que l'adsorption aux temps t1 et t2 soit terminée et inversément puisque les deux réacteurs, comme mentionné ci-dessus fonctionnent en alternance parfaite. Pour que ceci puisse être réalisé par le distributeur, il faut que la cavité (19) (dont une coupe transversale est présentée à la figure 8) ne soit pas en contact avec la tubulure (25) du stator lorsque la cavité (13) est en contact avec la tubulure (22) du stator donc pendant t1 + t2. En t3, il faut que la cavité (19) du rotor soit en contact avec la tubulure (25) du stator. Il faut en outre que la cavité (15) (dont une coupe transversale est présentée à la figure 7) soit en contact avec la tubulure (24) du stator lorsque la cavité (14) n'est pas en contact avec la tubulure (23) du stator, donc pendant t1. En t2, t3 et en t4, il faut que la cavité (15) du rotor ne soit pas en contact avec la tubulure (24) du stator. La courbure de la cavité (19) s'étend donc sur un angle d'environ 180° à environ 180° +(180°× (t3/(t3+t4))), et la courbure de la cavité (15) s'étend donc sur un angle d'environ 0° à environ 180° x (t1/(t1+t2)), toutes deux à l'épaisseur des tubulures et cavités près.

Le troisième élément R3 comprend dès lors un canal circulaire (33) prévu pour évacuer le gaz épuré pendant la phase d'adsorption provenant des réacteurs A et B vers le réservoir (9) à gaz épuré et pour repressuriser les réacteurs A et B pendant la phase de repressurisation. Ce canal circulaire communique en permanence, tout au long de la rotation du rotor, avec la tubulure (35) du stator et avec le canal central (32) via les deux tubulures (31) et (34) (une coupe transversale du même canal circulaire mais du deuxième élément est représenté à la figure 11). Le canal central (32) contient donc en permanence du gaz épuré provenant des deux réacteurs A et B à amener vers le réservoir 9 ou vers un des deux réacteurs pour le repressuriser. L'élément R3 comprend aussi une cavité (20) en partie circulaire reliée par une tubulure (40) au canal central (32), cette cavité étant prévue pour amener le gaz épuré du réacteur A au canal central (32) et l'emmener vers le réservoir (9) vers l'atmosphère lorsque la cavité (20) se trouve en face de la tubulure (26) du stator. La cavité étant solidaire du rotor, elle est en rotation continue et la durée de la communication entre la tubulure (26) du stator est proportionnelle à la courbure de la cavité (20). Le même raisonnement s'applique à la cavité (21) en partie circulaire reliée par une tubulure (41) au canal central (32), cette cavité étant prévue pour amener les gaz épuré du réacteur B au canal central (32) lorsque la cavité (21) se trouve en face de la tubulure (27) du stator. La communication entre le réservoir et les réacteurs est aussi nécessaire pour repressuriser les réacteurs avant de recommencer le cycle. Il faudra, étant donné que le réacteur A doit être en communication pendant les phases 1, 2, 4 avec le réservoir, que la durée de la communication entre la tubulure (26) et la cavité (20) soit t1 + t2 + t4, et que la durée de la communication entre la tubulure (27) du stator et la cavité (21) soit t3 + t4 + t1. Dans cette optique, il faut que la courbure de la cavité (20) (dont une coupe transversale est représentée à la figure 9) s'étende donc sur un angle d'environ 180°+ (180° x t3/(t3+t4)) à environ 180° x [(t1+t2)/(t1+t2)] à l'épaisseur des tubulures et cavités près. La courbure de la cavité (21) (dont une coupe transversale est représentée à la figure 10) s'étend sur un angle d'environ 180° x (t1/(t1+t2)) à environ 180° + [180° x [(t3+t4)/(t3+t4) ], à l'épaisseur des tubulures et cavités près.

A titre d'exemple pour une réalisation préférentielle, la durée de la phase 1 sera de 18 secondes et la durée de la phase 2 de 4 secondes. Dès lors, la durée de la troisième phase et de la quatrième phase sera respectivement de 18 et 4 secondes. La courbure de la cavité (13) s'étendra théoriquement de 0° à 180°. En pratique, pour s'assurer, étant donné l'épaisseur de la tubulure (22) de sortie, que le réacteur (A) n'est jamais en contact avec le réacteur (B), la courbure de la cavité (13) s'étendra d'environ 5° à environ 175°. La même marge d'angle sera ôtée à la courbure de chaque cavité. La courbure de la cavité (14) s'étendra théoriquement de 180° à 360°. Pratiquement, la courbure de la cavité (14) s'étendra de 185° à 355°.

Le tableau 1 ci-après reprend les valeurs théoriques et pratiques appliquées aux courbures de cavités (13, 14,15, 19, 20, 21).

**Tableau 1**

| cavité | courbure théorique | Courbure pratique |
|---|---|---|
| (13) | de 0° à 180° | de 5° à 175° |
| (14) | de 180° à 360° | de 185° à 355° |
| (15) | de 0° à 147,27° | de 5° à 142,27° |
| (19) | de 180° à 327,27° | de 185° à 322,27° |
| (20) | de 327,27 ° à 180° | de 332,27° à 175° |
| (21) | de 147,27° à 360° | de 152,27° à 355° |

La sortie et ou l'entrée des gaz brut, épuré ou des contaminant est réalisée par les tubulures du stator de (22 à 27). Ces tubulures comprennent des pièces de raccord présentes pour connecter les tubulures aux tubes de communication avec les réacteurs. Ces pièces de raccord sont représentées à la figure 3. La première pièce (44) dans la tubulure repose sur une butée (45) présente dans chaque orifice de (22 à 27) et comprend une fente de passage de gaz qui sera expliquée en de plus amples détails ci-après. Un bouchon (46) vient obturer en partie la sortie de la pièce de raccord (44). Ce bouchon (46) est par exemple soudé au tube de sortie de gaz (3a) vers le réacteur A.

La figure 12 montre deux coupes transversales de la tubulure (22) illustré à titre d'exemple comprenant l'ouverture rectangulaire. La figure 12 A est une coupe transversale selon l'axe Y-Y de la tubulure 22 comme illustré à la figure 3 et la figure 12 B est une coupe transversale selon l'axe Z-Z de la tubulure 22 comme illustrée à la figure 3.

La pièce de raccord 44 comprend une première fente (49) de passage de gaz et une seconde fente (48) de passage de gaz, les deux fentes étant juxtaposées et communiquent entre elles. La première fente (49) est de section inférieure à la section de la seconde fente (48) respectivement (à titre d'exemple, les sections valent respectivement 3 mm X 30 mm et 5 mm X 30 mm pour une unité de faible débit). Les deux fentes sont comprises dans la pièce de raccord (44) qui se situe contre une butée (45) présente dans la tubulure (22) du stator. V ers l'extérieur un bouchon (46) est positionné pour obturer la fente (48), lequel bouchon (46) est relié à un tuyau (ici 3a) soudé de manière hermétique pour éviter les échappements non souhaitables et les pertes de gaz. Les fentes ont été prévues pour pouvoir maintenir une pression constante et ralentir la vitesse des gaz à la sortie des réacteurs ou réservoirs sous-pression.

Le gaz brut à épurer dans la réalisation préférentielle selon l'invention sera de l'air duquel on purifiera l'oxygène et les contaminants rejetés à l'atmosphère seront les gaz inertes contenus dans celui-ci, l'azote, etc. L'invention n'est pas limitée à cette application et en fonction des adsorbants contenus dans les réacteurs, le gaz à purifier peut différer de l'oxygène.

### Liste des éléments représentés aux figures

- 1.: Compresseur
- 2.: Pompe à vide
- 3.: Tubulure d'amenée d'air A
- 3'.: Tubulure d'amenée d'air B
- 4.: Tubulure de sortie de B
- 4'.: Tubulure de sortie de A
- 5.: Dessicant
- 6.: Adsorbant
- 7.: Distributeur
- 8.: Tube d'entrée du réservoir
- 9.: Réservoir
- 10.: Tube vers une utilisation
- 11.: Rotor
- 12.: Stator
- 13.: Cavité 1 sur R1
- 14.: Cavité 2 sur R1
- 15.: Cavité 2 sur R2
- 16.: Entrée d'air au stator
- 17.: Canal circulaire de R1 sur le rotor
- 18.: Canal central de R1
- 19.: Cavité 1 sur R2
- 20.: Cavité 1 sur R3
- 21.: Cavité 2 sur R3
- 22.: Tubulure de S1 vers le réacteur A
- 23.: Tubulure de S1 vers le réacteur B
- 24.: Tubulure de S2 vers le réacteur B
- 25.: Tubulure de S2 vers le réacteur A
- 26.: Tubulure de S3 vers le réacteur A
- 27.: Tubulure de S3 vers le réacteur B
- 28.: Canal central de R2
- 29.: Canal circulaire de R2
- 30.: Sortie sur S2 du stator (vers atmosphère)
- 31.: Première tubulure entre les canaux centraux et les canaux circulaires
- 32.: Canal central de R3
- 33.: Canal circulaire de R3
- 34.: Seconde tubulure entre les canaux centraux et les canaux circulaires
- 35.: Sortie sur S3 du stator (vers réservoir)
- 36.: Tubulure entre 13 et 18
- 37.: Tubulure entre 14 et 18
- 38.: Tubulure entre 15 et 28
- 39.: Tubulure entre 19 et 28
- 40.: Tubulure entre 20 et 32
- 41.: Tubulure entre 21 et 32
- 42.: Bouchon
- 43.: Bouchon
- 44.: Raccord
- 45.: Butée
- 46.: Bouchon
- 47.: Canalisation prévue pour le rinçage
- 48.: Deuxième fente
- 49.: Première fente

## Revendications

1. Distributeur rotatif comportant un stator (12) muni de tubulures de passage de gaz latérales (16, 30, 35, 22, 23, 24, 25, 26, 27) vers l'extérieur et un rotor (11) agencé pour être entraîné par un moteur, ledit distributeur comportant au moins un élément sur le rotor et un élément sur le stator, ledit élément du rotor comportant un canal central de passage de gaz (18, 28, 32) le long de son axe de rotation, **caractérisé en ce que** ledit élément du rotor comprend au moins un canal circulaire (17, 29, 33) de passage de gaz d'une largeur d'au moins 10 mm s'étendant sur une circonférence de 360°, ledit canal circulaire (17, 29, 33) étant creusé sur sa surface externe, et perpendiculaire à l'axe de rotation et comprend au moins une première tubulure (31, 34) de passage de gaz de diamètre d'au moins 8 mm, mettant en contact ledit canal circulaire (17, 29, 33) et ledit canal central (18, 28, 32), et au moins une cavité en partie circulaire (13, 14, 15, 19, 20, 21) de passage de gaz de largeur d'au moins 30 mm creusée sur une profondeur inférieure au rayon du rotor possédant au moins une deuxième tubulure (36, 37, 38, 39, 40, 41) de passage de gaz de diamètre d'au moins 8mm, mettant en contact ladite cavité en partie circulaire (13, 14, 15, 19, 20, 21) et ledit canal central (18, 28, 32), ledit élément du stator comportant au niveau du canal circulaire (17, 29, 33) au moins une troisième tubulure (16, 30, 35) de passage de gaz mettant en contact l'extérieur et le canal circulaire du rotor et moins une quatrième tubulure (22, 23, 24, 25, 26, 27) de passage de gaz mettant en contact la cavité en partie circulaire (13, 14, 15, 19, 20, 21) du rotor et l'extérieur.

2. Dispositif de séparation de gaz par adsorption préférentielle comprenant ledit distributeur rotatif (7) selon la revendication 1, un premier réacteur (A), un réservoir (9) agencé pour stocker du gaz épuré, ledit dispositif est prévu pour fonctionner selon un système à 4 phases (phases 1, 2, 3, 4) de temps respectifs t1, t2, t3, et t4, comprenant l'adsorption préférentielle dans le premier réacteur (A) des contaminants du gaz brut pendant un temps (t1 + t2) et l'évacuation simultanée du gaz épuré du premier réacteur (A) vers ledit réservoir (9) à gaz épuré pendant ce même temps (t1 + t2), la désorption des composants adsorbés du premier réacteur (contaminants compris dans le gaz brut) pendant un temps t3 et la repressurisation du premier réacteur (A) pendant un temps t4 avec le gaz épuré du réservoir (9), lequel dispositif est **caractérisé en ce que** le rotor (11) dudit distributeur (7) est agencé pour être entraîné par un mouvement continu dudit moteur et **en ce qu'**un tour de rotor correspond à la séquence des quatre phases consécutives, et **en ce que** le distributeur comporte un premier, un deuxième et un troisième élément juxtaposés le long de l'axe de rotation, lesdits éléments étant étanches les uns par rapport aux autres comportent chacun une première cavité en partie circulaire (13, 19, 20) positionnées de manière relative les unes par rapport aux autres, le premier élément étant prévu pour la réalisation de la phase 1 et de la phase 2 en mettant en contact pendant un temps (t1 + t2) la cavité en partie circulaire (13) du rotor (11) avec l'entrée du premier réacteur (3) via la tubulure (22) du stator (12) et le canal circulaire (17) du rotor (11) avec la source de gaz brut via la tubulure (16) du stator (12) pour l'entrée du gaz brut (adsorption pendant un temps t1 + t2), le second élément étant prévu pour mettre en communication, pour la réalisation de la phase 3, le canal circulaire (29) du rotor (11) avec l'atmosphère via la tubulure (30) du stator pour le rejet des gaz adsorbés et avec le premier réacteur (A) par au moins une cavité en partie circulaire (19) pour la désorption des gaz impurs (décharge pendant un temps t3) via la tubulure (25) du stator (12), le troisième élément étant prévu pour mettre en communication, pour la réalisation de la phase 4 et de la phase 1 et de la phase 2, pendant un temps (t4 + (t1 + t2)), le canal circulaire (33) du rotor (11) avec le réservoir à gaz épuré (9) via la tubulure (35) du stator et avec le premier réacteur (A) pour la décharge du gaz épuré dudit premier réacteur (A) (pendant t1 + t2) et pour la repressurisation du premier réacteur (t4) par au moins une cavité en partie circulaire (20)

3. Dispositif de séparation de gaz selon la revendication 2 **caractérisé en ce que** la courbure de ladite première cavité (13) dudit premier élément s'étend sur un angle de 0° à 180° x ((t1+t2)/(t1 +t2)), la courbure de ladite première cavité (19) dudit deuxième élément s'étend sur un angle de 180° à 180° + [180°x (t3/(t3+t4))], la courbure de ladite première cavité (20) dudit troisième élément s'étend sur un angle de 180° + [180° x (t3)/(t3+t4))] à 180 ° x ((t1 +t2)/(t1 +t2)).

4. Dispositif de séparation de gaz selon l'une des revendications 2 à 3, **caractérisé en ce qu'**il est prévu pour comprendre un deuxième réacteur (B), et pour fonctionner selon ledit système à 4 phases de temps respectifs t3, t4, t1, et t2, correspondant à l'adsorption préférentielle des composants du gaz brut dans ledit deuxième réacteur (B) pendant un temps (t3 + t4) et l'évacuation simultanée du gaz épuré dudit deuxième réacteur (B) pendant ce même temps (t3 +t4), la désorption dudit deuxième réacteur (B) des composants adsorbés pendant un temps t1 vers l'atmosphère et la repressurisation pendant un temps t2 dudit réacteur (B) avec le gaz épuré du réservoir (9).

5. Dispositif de séparation de gaz selon l'une des revendications 2 à 4, **caractérisé en ce** chaque élément dudit distributeur (7) comprend une deuxième cavité (14, 15, 21) en partie circulaire pour une alimentation et une décharge d'un deuxième réacteur (B), **caractérisé en ce que** la courbure de ladite seconde cavité (14) dudit premier élément s'étend sur un angle de 180° à 180° + [180° x ((t3+t4)/(t3 + t4)), la courbure de ladite seconde cavité (15) dudit deuxième élément s'étendant sur un angle de 0° à 180° x (t1/(t1+t2)), et la courbure de ladite seconde cavité (21) dudit troisième élément s'étendant sur un angle de 180° x (t1/(t1+t2)), à 180°+ [180°x [(t3+t4)/(t3+t4))].

6. Dispositif de séparation de gaz selon l'une des revendications 2 à 5, **caractérisé en ce qu'**il est applicable pour des capacités de production comprises dans la plage allant de 1 à 4000 m³/h.

7. Dispositif de séparation de gaz selon l'une des revendications 4 à 6 **caractérisé en ce que** ces les deux réacteurs sont constitués d'un seul réservoir de forme tronconique divisé en deux parties symétriques dont l'alimentation en gaz brut est réalisée de manière verticale.

8. Dispositif de séparation de gaz selon l'une des revendications 4 à 7, **caractérisé en ce que** le dispositif est une tour compacte comprenant les réacteurs au dessus du réservoir, les pompes et compresseurs et le distributeur.

9. Dispositif de séparation de gaz selon l'une des revendications 6 à 8, **caractérisé en ce qu'**il comprend une canalisation (47) munie d'une vanne agencée pour mettre en contact les sorties (4 et 4') des réacteurs (A et B), laquelle canalisation (47) est prévue pour réaliser en même temps que la baisse de pression un rinçage à contre-courant du réacteur subissant la désorption.

## Claims

1. Rotary distributor comprising a stator (12) provided with lateral gas passage nozzles (16, 30, 35, 22, 23, 24, 25, 26, 27) towards the outside and a rotor (11) arranged so as to be driven by a motor, the said distributor comprising at least one element on the rotor and one element on the stator, the said element of the rotor comprising a central gas passage channel (18, 28, 32) along its rotation axis, **characterised in that** the said element of the rotor comprises at least one circular gas passage channel (17, 29, 33) with a width of at least 10 mm extending over a circumference of at least 360°, the said circular channel (17, 29, 33) being hollowed on out on its external surface, and perpendicular to the rotation axis, and comprises at least a first gas passage nozzle (31, 34) with a diameter of at least 8 mm, putting the said circular channel (17, 29, 33) and the said central channel (18, 28, 32) in contact, and at least one partially circular gas passage cavity (13, 14, 15, 19, 20, 21) with a width of at least 30 mm hollowed out over a depth less than the radius of the rotor having at least a second gas passage nozzle (36, 37, 38, 39, 40, 41) with a diameter of at least 8 mm, putting the said partially circular cavity (13, 14, 15, 19, 20, 21) and the said central channel (18, 28, 32) in contact, the said element of the stator comprising, at the circular channel (17, 29, 33), at least a third gas passage nozzle (16, 30, 35) putting the outside and the circular channel of the rotor in contact and at least a fourth gas passage nozzle (22, 23, 24, 25, 26, 27) putting the partially circular cavity (13, 14, 15, 19, 20, 21) of the rotor and the outside in contact.

2. Device for separating gases by preferential adsorption, comprising the said rotary distributor (7) according to claim 1, a first reactor (A), a reservoir (9) arranged so as to store purified gas, the said device is designed to function according to a 4-phase system (phases 1, 2, 3, 4) with respective times t1, t2, t3 and t4, comprising the preferential adsorption in the first reactor (A) of the contaminants in the untreated gas for a time (t1 + t2) and the simultaneous discharge of the purified gas from the first reactor (A) to the said purified-gas reservoir (9) during this same time (t1 + t2), the desorption of the adsorbed components from the first reactor (the contaminants included in the untreated gas) for a time t3 and the repressurisation of the first reactor (A) for a time t4 with the purified gas from the reservoir (9), the said device being **characterised in that** the rotor (11) of the said distributor (7) is arranged so as to be driven by a continuous movement of the said motor and **in that** one rotor turn corresponds to the sequence of the four consecutive phases, and **in that** the distributor comprises first, second and third elements disposed along the rotation axis, the said elements being sealed with respect to one another, each comprising a first partially circular cavity (13, 19, 20) positioned relative to one another, the first element being provided for implementing phase 1 and phase 2 by putting in contact, for a time (t1 + t2), the partially circular cavity (13) of the rotor (11) with the inlet of the first reactor (3) via the nozzle (22) of the stator (12) and the circular channel (17) of the rotor (11) with the source of untreated gas via the nozzle (16) of the stator (12) for admitting the untreated gas (adsorption for a time t1 + t2), the second element being provided for putting in communication, for implementing phase 3, the circular channel (29) of the rotor (11) with atmosphere via the nozzle (30) of the stator for discharging the adsorbed gases and with the first reactor (A) by at least one partially circular cavity (19) for desorbing the impure gases (discharged for a time t3) via the nozzle (25) of the stator (12), the third element being provided for putting in communication, for implementing phase 4 and phase 1 and phase 2, for a time (t4 + (t1 + t2)), the circular channel (33) of the rotor (11) with the purified-gas reservoir (9) via the nozzle (35) of the stator and with the first reactor (A) for discharging the purified gas from the said first reactor (A) (during t1 + t2) and for repressurising the first reactor (t4) through at least one partially circular cavity (20).

3. Gas separation device according to claim 2, **characterised in that** the curvature of the said first cavity (13) of the said first element extends over an angle of 0° to 180° x ((t1 + t2)/(t1 + t2)), the curvature of the said first cavity (19) of the said second element extends over an angle of 180° to 180° + [180° x (t3) / (t3 + t4))], the curvature of the said first cavity (20) of the said third element extends over an angle of 180° + [180° x (t3) / (t3 + t4))] to 180° x ((t1 + t2) / (t1 + t2)).

4. Gas separation device according to one of claims 2 to 3, **characterised in that** it is designed to comprise a second reactor (B) to function according to the said system with 4 phases with respective times t3, t4, t1 and t2, corresponding to the preferential adsorption of the components of the untreated gas in the said second reactor (B) for a time (t3 + t4) and the simultaneous discharge of the purified gas from the said second reactor (B) during this same time (t3 + t4), the desorption from the said second reactor (B) of the adsorbed components for a time t1 to atmosphere and the repressurisation for a time t2 of the said reactor (B) with the purified gas from the reservoir (9).

5. Gas separation device according to one of claims 2 to 4, **characterised in that** each element of the said distributor (7) comprises a partially circular second cavity (14, 15, 21) for supplying and discharging a second reactor (B), **characterised in that** the curvature of the said second cavity (14) of the said first element extends over an angle of 180° + [180° x ((t3 + t4)/(t3 + t4))], the curvature of the said second cavity (15) of the said second element extending over an angle of 0° to 180° x (t1/(t1 + t2)), and the curvature of the said second cavity (21) of the said third element extending over an angle of 180° x (t1/ (t1 + t2), to 180° + [180° x ((t3 + t4)/(t3 + t4))].

6. Gas separation device according to one of claims 2 to 5, **characterised in that** it is applicable for production capacities lying in the range from 1 to 4000 m³/h.

7. Gas separation device according to one of claims 4 to 6, **characterised in that** the two reactors consist of a single frustoconically shaped reservoir divided into two symmetrical parts, the supply of gas to which is effected vertically.

8. Gas separation device according to one of claims 4 to 7, **characterised in that** the device is a compact tower comprising the reactors above the reservoir, the pumps and compressors and the distributor.

9. Gas separation device according to one of claims 6 to 8, **characterised in that** it comprises a pipe (47) provided with a valve arranged to put in contact the outlets (4 and 4') of the reactors (A and B), the said pipe (47) being designed to produce, at the same time as the pressure drop, a reverse-direction rinsing of the reactor undergoing the desorption.

## Patentansprüche

1. Rotationsverteiler, umfassend einen Stator (12), der mit seitlichen Rohrleitungen für den Durchgang von Gasen (16, 30, 35, 22, 23, 24, 25, 26, 27) nach außen versehen ist, und einen Rotor (11), der derart angeordnet ist, dass er von einem Motor angetrieben werden kann, wobei der Verteiler mindestens ein Element auf dem Rotor und ein Element auf dem Stator umfasst, wobei das Element des Rotors einen zentralen Gasdurchgangskanal (18, 28, 32) entlang seiner Rotationsachse umfasst, **dadurch gekennzeichnet, dass** das Element des Rotors mindestens einen kreisförmigen Kanal (17, 29, 33) für den Gasdurchgang mit einer Breite von mindestens 10 mm umfasst, der sich auf einem Umfang von 360° erstreckt, wobei der kreisförmige Kanal (17, 29, 33) auf seiner Außenseite senkrecht auf die Rotationsachse ausgehöhlt ist und mindestens eine erste Rohrleitung (31, 34) für den Gasdurchgang mit einem Durchmesser von mindestens 8 mm, die den kreisförmigen Kanal (17, 29, 33) und den zentralen Kanal (18, 28, 32) miteinander in Kontakt bringt, und mindestens einen Hohlraum am kreisförmigen Teil (13, 14, 15, 19, 20, 21) für den Gasdurchgang mit einer Breite von mindestens 30 mm umfasst, der auf einer geringeren Tiefe als der Radius des Rotors ausgehöhlt ist, umfassend mindestens eine zweite Rohrleitung (36, 37, 38, 39, 40, 41) für den Gasdurchgang mit einem Durchmesser von mindestens 8 mm, die den Hohlraum am kreisförmigen Teil (13, 14, 15, 19, 20, 21) und den zentralen Kanal (18, 28, 32) in Kontakt bringt, wobei das Element des Stators im Bereich des kreisförmigen Kanals (17, 29, 33) mindestens eine dritte Rohrleitung (16, 30, 35) für den Gasdurchgang, die den Außenbereich und den kreisförmigen Kanal des Rotors in Kontakt bringt, und mindestens eine vierte Rohrleitung (22, 23, 24, 25, 26, 27) für den Gasdurchgang umfasst, die den Hohlraum im kreisförmigen Teil (13, 14, 15, 19, 20, 21) des Rotors und den Außenbereich in Kontakt bringt.

2. Gaszerlegungsanlage durch bevorzugte Adsorption, umfassend den Rotationsverteiler (7) nach Anspruch 1, einen ersten Reaktor (A), einen Behälter (9), der für die Lagerung des gereinigten Gases vorgesehen ist, wobei die Anlage dazu bestimmt ist, nach einem Vierphasensystem (Phasen 1, 2, 3, 4) mit jeweiligen Zeiten t1, t2, t3, t4 zu funktionieren, umfassend die bevorzugte Adsorption der Kontaminierungsstoffe des Rohgases in den ersten Reaktor (A) während einer Zeit (t1 + t2) und die gleichzeitige Ableitung des gereinigten Gases aus dem ersten Reaktor (A) zum Behälter für gereinigtes Gas während dieser selben Zeit (t1 + t2), die Desorption der adsorbierten Komponenten aus dem ersten Reaktor (im Rohgas enthaltene Kontaminierungsstoffe) während einer Zeit t3 und die neuerliche Drucksteigerung des ersten Reaktors (A) während einer Zeit t4 mit dem gereinigten Gas des Behälters (9), wobei die Anlage **dadurch gekennzeichnet ist, dass** der Rotor (11) des Verteilers (7) derart angeordnet ist, dass er von einer kontinuierlichen Bewegung des Motors angetrieben wird und dass eine Rotorumdrehung der Sequenz der vier aufeinander folgenden Phasen entspricht, und dass die Anlage ein erstes, zweites und drittes nebeneinander angeordnetes Element entlang der Rotationsachse umfasst, wobei die Elemente zueinander dicht sind und jeweils einen ersten Hohlraum im kreisförmigen Teil (13, 19, 20), die im Verhältnis zueinander positioniert sind, umfassen, wobei das erste Element für die Durchführung der Phase 1 und der Phase 2 vorgesehen ist, wobei während einer Zeit (t1 + t2) der Hohlraum im kreisförmigen Teil (13) des Rotors (11) mit dem Eingang des ersten Reaktors (3) über die Rohrleitung (22) des Stators (12) und der kreisförmige Kanal (17) des Rotors (11) mit der Rohgasquelle über die Rohrleitung (16) des Stators (12) für den Eintritt des Rohgases (Adsorption während einer Zeit t1 + t2) in Kontakt gebracht wird, wobei das zweite Element dazu vorgesehen ist, für die Durchführung der Phase 3 den kreisförmigen Kanal (29) des Rotors (11) mit der Atmosphäre über die Rohrleitung (30) des Stators für die Ableitung der adsorbierten Gase und mit dem ersten Reaktor (A) durch mindestens einen Hohlraum im kreisförmigen Teil (19) für die Desorption der unreinen Gase (Beseitigung während einer Zeit t3) über die Rohrleitung (25) des Stators (12), um die Phase 4 und die Phase 1 und die Phase 2 während einer Zeit (t4 + (t1 + t2)) durchzuführen, den kreisförmigen Kanal (33) des Rotors (11) mit dem Behälter für gereinigtes Gas (9) über die Rohrleistung (35) des Stators und mit dem ersten Reaktor (A) für die Beseitigung des gereinigten Gases aus dem ersten Reaktor (A) (während t1 + t2) und für die Wiederherstellung des Drucks des ersten Reaktors (t4) durch mindestens einen Hohlraum im kreisförmigen Teil (20) in Verbindung zu bringen.

3. Gaszerlegungsanlage nach Anspruch 2, **dadurch gekennzeichnet, dass** sich die Krümmung des ersten Hohlraums (13) des ersten Elements über einen Winkel von 0° bis 180° x ((t1 + t2)/(t1 + t2)) erstreckt, sich die Krümmung des ersten Hohlraums (19) des zweiten Elements über einen Winkel von 180° bis 180° + [180° x (t3/(t3 + t4))] erstreckt, sich die Krümmung des ersten Hohlraums (29) des dritten Elements über einen Winkel von 180° + [180° x (t3)/(t3 + t4))] bis 180 ° x ((t1 + t2)/(t1 + t2)) erstreckt.

4. Gaszerlegungsanlage nach einem der Ansprüche 2 bis 3, **dadurch gekennzeichnet, dass** sie dazu vorgesehen ist, einen zweiten Reaktor (B) zu umfassen und nach dem Vierphasensystem mit jeweiligen Zeiten t3, t4, t1 und t2 zu funktionieren, entsprechend der bevorzugten Adsorption der Komponenten des Rohgases in den zweiten Reaktor (B) während einer Zeit (t3 + t4) und der gleichzeitigen Beseitigung des gereinigten Gases aus dem zweiten Reaktor (B) während dieser selben Zeit (t3 + t4), der Desorption der adsorbierten Komponenten aus dem zweiten Reaktor (B) während einer Zeit t1 in die Atmosphäre und der Wiederherstellung des Drucks des Reaktors (B) während einer Zeit t2 mit dem gereinigten Gas des Behälters (9).

5. Gaszerlegungsanlage nach einem der Ansprüche 2 bis 4, **dadurch gekennzeichnet, dass** jedes Element des Verteilers (7) einen zweiten Hohlraum (14, 15, 21) im kreisförmigen Teil für eine Versorgung und Entleerung eines zweiten Reaktors (B) umfasst, **dadurch gekennzeichnet, dass** sich die Krümmung des zweiten Hohlraums (14) des ersten Elements über einen Winkel von 180° bis 180° + [180° x ((t3 + t4)/(t3 + t4)) erstreckt, sich die Krümmung des zweiten Hohlraums (15) des zweiten Elements über einen Winkel von 0° bis 180° x (t1/(t1 + t2)) erstreckt, sich die Krümmung des zweiten Hohlraums (21) des dritten Elements über einen Winkel von 180° x (t1/(t1 + t2)) bis 180° + [180° x (t3 + t4)/(t3 + t4))] erstreckt.

6. Gaszerlegungsanlage nach einem der Ansprüche 2 bis 5, **dadurch gekennzeichnet, dass** sie für Produktionskapazitäten in einem Bereich von 1 bis 4000 m³/h anwendbar ist.

7. Gaszerlegungsanlage nach einem der Ansprüche 4 bis 6, **dadurch gekennzeichnet, dass** die beiden Reaktoren von einem einzigen Behälter mit kegelstumpfartiger Form in zwei symmetrischen Teilen gebildet sind, deren Versorgung mit Rohgas vertikal erfolgt.

8. Gaszerlegungsanlage nach einem der Ansprüche 4 bis 7, **dadurch gekennzeichnet, dass** die Anlage ein kompakter Turm ist, umfassend die Reaktoren über dem Behälter, die Pumpen und Kompressoren und den Verteiler.

9. Gaszerlegungsanlage nach einem der Ansprüche 6 bis 8, **dadurch gekennzeichnet, dass** sie einen Kanal (47) umfasst, der mit einem Ventil versehen ist, das derart angeordnet ist, dass es die Ausgänge (4 und 4') der Reaktoren (A und B) in Kontakt bringt, wobei der Kanal (47) dazu vorgesehen ist, gleichzeitig mit der Druckminderung ein Gegenstromspülen des der Desorption ausgesetzten Reaktors durchzuführen.
